# EUROPEAN PATENT APPLICATION

(11) **EP 1 273 876 A2**
(43) Date of publication of application: **08.01.2003**
(21) Application number: 02014654.4
(22) Date of filing: 02.07.2002
(51) Int. Cl.: G01B 5/004, G01B 11/00, G01B 21/04

(54) **Device and method for determining forms, in particular shoemaker's models**

(30) Priority: 03.07.2001 IT TO20010640
(71) Applicant: Newlast Automation S.r.l., 15057 Tortona (IT)
(72) Inventor: Pozzi, Ugo, 76467 Rastatt (DE)
(74) Representative: Cerbaro, Elena, Dr.

(57) **Abstract**

A device for determining forms, in particular shoemaker's models, wherein a rotation device rotates a form about an axis of rotation (10), and a viewing device determines the three-dimensional coordinates P(z,c,p) of a number of points (P₁, P₂, ... Pᵢ ... Pₘₐₓ) relating to a number of profiles (Pp) lying in respective different planes (Kp) parallel to one another. A processing device calculates the current angular coordinate, with respect to the axis of rotation (10), of each point in a scan on the basis of the coordinates of a pair of points relating to a previous scan of a different plane.

## Description

The present invention relates to a device and method for determining forms, in particular shoemaker's models.

Devices for determining forms, in particular shoemaker's models, are known which rotate the form about a normally vertically axis of rotation, and, by means of an optoelectronic viewing device, determine the coordinates of points on the surface of the form; which coordinates are normally expressed with respect to a machine reference having a vertical axis Z parallel to the axis of rotation.

The points are determined so as to determine, for a given value along the Z axis, the coordinates of a number of points located along a parallel profile of the form and lying in a plane perpendicular to the axis of rotation.

The viewing device determines points for different values along the Z axis, so as to scan the form in a number of parallel planes.

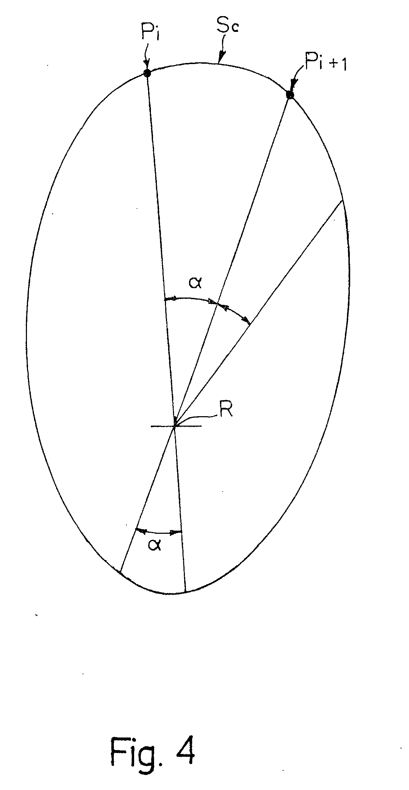

Each point is normally spaced angularly with respect to the preceding point by an angle α (measured with respect to the axis of rotation R - Figure 4) which remains substantially constant for different successive points relating to the same parallel profile. The parallel profile curved segment Sc formed by said angle, however, may vary considerably, owing to the different distance between the lateral surface of the form and the axis of rotation R. More specifically, for a given angle α, a curved segment Sc close to the axis of rotation is smaller than a segment further away from the axis of rotation.

For this reason, successive points belonging to the same parallel profile may be spaced widely differing distances apart along the parallel profile. That is, though the angular spacing between successive points is substantially constant, the spacing of the points along the parallel profile varies widely.

As a result, point determination is unsatisfactory in many operating conditions.

For example, point determination using known methods is unsatisfactory in the presence of rapid changes in the tilt angle of the form with respect to the axis of rotation; in which case, point determination of the fast-tilt-change areas as performed by known devices may fail to accurately describe the form.

A need is therefore felt for a device for determining forms, wherein points can also be determined accurately in fast-tilt-change areas.

According to the present invention, there is provided a device for determining forms, in particular shoemaker's models, as claimed in Claim 1.

The present invention also relates to a method of determining forms, as claimed in Claim 4.

A non-limiting embodiment of the invention will be described by way of example with reference to the accompanying drawings, in which:
Figure 1 shows a view in perspective of a device for determining forms, in particular shoemaker's models, in accordance with the teachings of the present invention;
Figure 2 shows a geometric diagram of operations performed by the device and method according to the present invention;
Figure 3 shows the operations performed in the method according to the present invention;
Figure 4 shows a diagram of the geometric basis of a technical problem solved by the device and method according to the present invention.

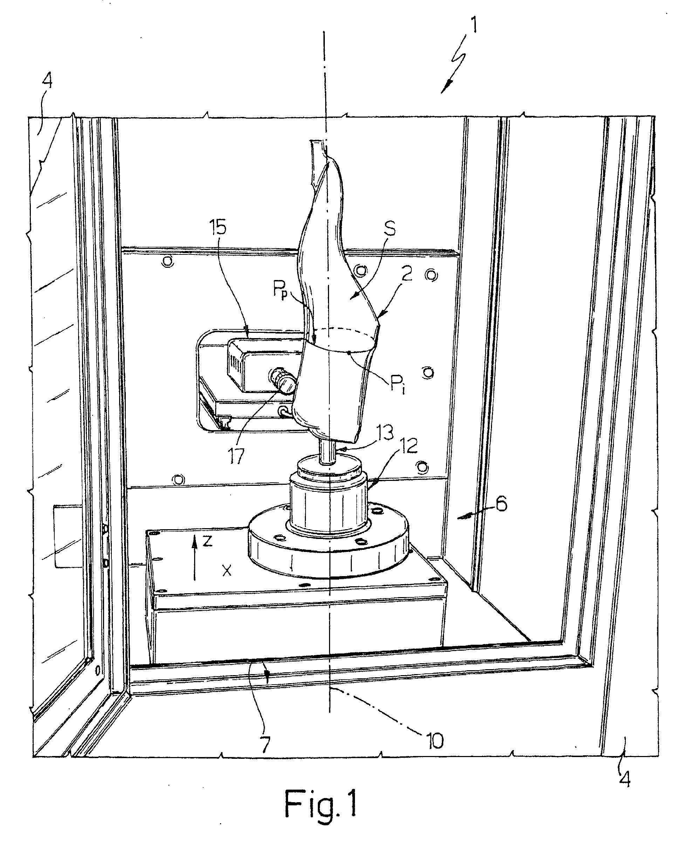

Number 1 in Figure 1 indicates as a whole a device for determining forms, in particular shoemaker's models 2.

Device 1, in the embodiment shown, comprises a supporting case 4 (preferably defined by a metal parallelepiped-shaped cabinet) having a rotating device 6 accessible from outside case 4 through an opening 7, and for supporting and rotating form 2 about a vertical axis 10. More specifically, rotating device 6 comprises a cylindrical base 12 integral with case 4; and a shaft 13 coaxial with axis 10 and movable angularly, with respect to cylindrical base 12, by an electric motor (not shown) housed in case 4.

More specifically, the top end of shaft 13 fits inside a coaxial hole (not shown) in form 2, which is fixed stably to shaft 13 and rotated about axis 10.

A known viewing device 15, housed in case 4, determines three-dimensional coordinates **P(z,c,p)** of points **Pi** on the surface S of form 2.

Three-dimensional coordinates **P(z,c,p)** are expressed with respect to a number of machine references, wherein the **Z** axis is a vertical axis parallel to axis 10, quantity c is an angular value indicating the angle of rotation about axis 10 with respect to a vertical reference plane **PR**, and coordinate **p** represents a determined depth.

Device 15 preferably comprises a viewing device 17 - in particular, a television camera - movable reversibly along the **Z** axis and to/from form 2.

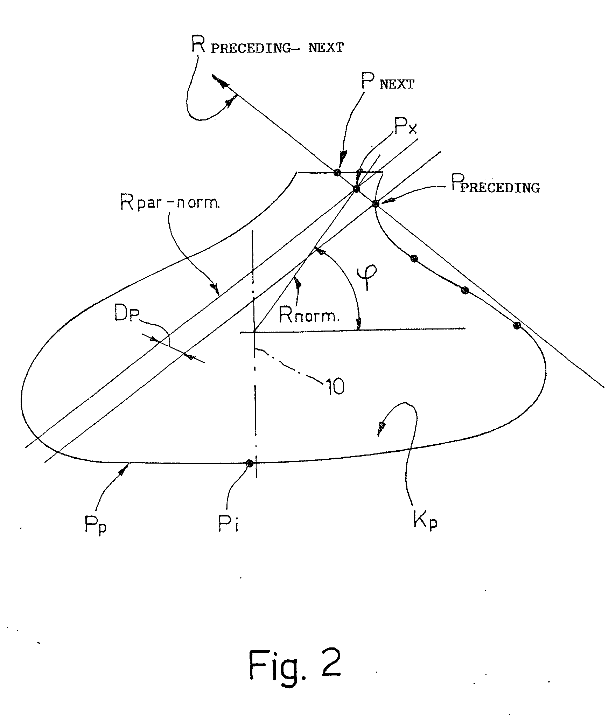

More specifically (Figure 2), when determining points **Pi**, form 2 is rotated about axis 10 so as to determine, for a given value along the **Z** axis, the three-dimensional coordinates **P(z,c,p)** of a number of points **P**_{**1**}**, P**_{**2**}**, ... P**_{**i**} **... P**_{**max**} located along a parallel profile **Pp** of form 2 and lying in a plane **Kp** perpendicular to axis 10. Device 15 determines points **P**_{**i**} for different values along the **Z** axis, so as to scan form 2 in a number of parallel planes **Kp.** More specifically, adjacent planes **Kp**_{**i**} and **Kp**_{**i+1**} are separated along axis 10 by a spacing Δ**z**.

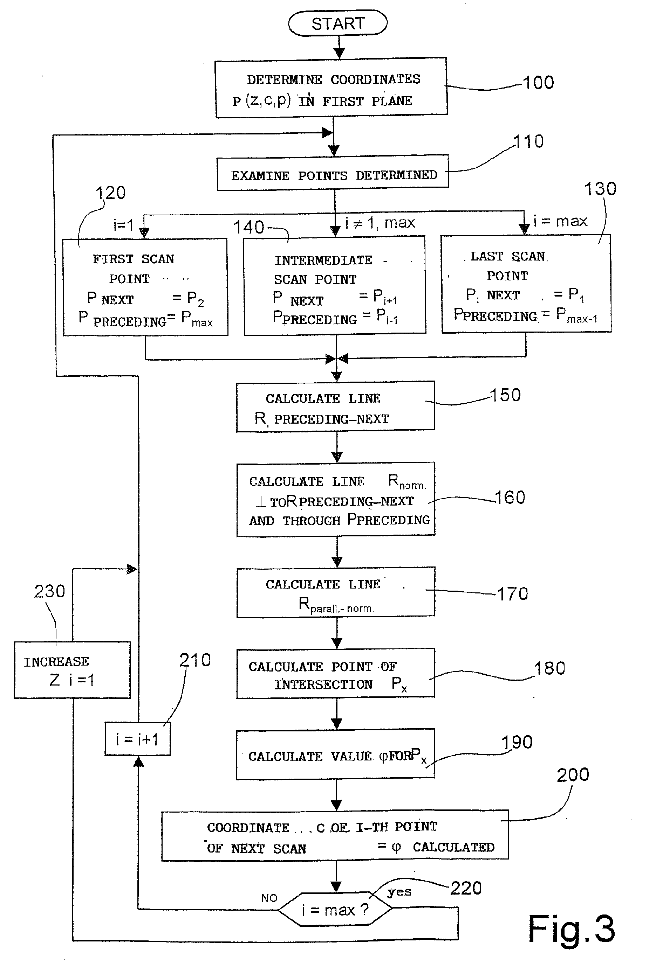

The operations in the method according to the present invention will be described with reference to Figure 3.

To begin with, a block 100 determines the three-dimensional coordinates **P(z,c,p)** of points **P**_{**i**} lying in a first plane **Kp**_{**i**}, so as to determine a **max** number of three-dimensional coordinates **P(z,c,p)** of successive adjacent points **P**_{**1**}**, P**_{**2**}**, P**_{**3**}**, ... P**_{**i**} **... P**_{**max**} lying in a first plane and relating to a first parallel profile **Pp.**

Index i indicates the sequence value of the scanned point, and equals 1 for the first point determined in plane **Kp**_{**i**}, and **max** for the last point determined in plane **Kp**_{**i**}.

For the first plane and the first parallel profile examined, each point **P**_{**i**} is spaced angularly with respect to the preceding point by a substantially constant angle (measured with respect to axis of rotation 10).

Block 100 is followed by a block 110, which selects and examines the determined points individually and in sequence by determining the value of index **i**; more specifically:
. if index **i** equals **1** (first scan point selected), block 110 is followed by a block 120;
. if index **i** equals **max** (last scan point selected), block 110 is followed by a block 130; and
. if index **i** is other than **1** or **max** (intermediate scan point selected), block 110 is followed by a block 140.

Block 120 selects as the initial calculating point **P**_{**next**} the next point (i.e. point **P**_{**2**}) following the current one with an index **i** of **1;** and as the final calculating point **P**_{**preceding**} the last scan point **P**_{**max**} with an index **i** of value **max.** A pair of points is thus selected comprising the second scan point and the last scan point.

Block 130 selects the first scan point with an index **i** of **1** as the initial calculating point **P**_{**next**}**;** and the point preceding the one with an index **i** of value **max** as the final calculating point **P**_{**next**}.

A pair of points is thus selected comprising the first scan point and the last-but-one scan point.

Block 140 selects as the initial calculating point **P**_{**next**} the adjacent point following the currently selected one (i.e. the point with an index **i** of **i+1**); and as the final calculating point **P**_{**preceding**} the adjacent point preceding the currently selected one (i.e. the point with an index **i** of **i-1**). The adjacent points on opposite sides of the current point are thus selected.

Blocks 120, 130 and 140 are followed by a block 150, which calculates the line **R**_{**preceding-next**} through the final calculating point **P**_{**preceding**} and the initial calculating point **P**_{**next**} defined in blocks 120, 130 and 140.

Block 150 is followed by a block 160, which calculates the line **R**_{**norm**} perpendicular to line **R**_{**preceding-next**} and through the final calculating point **P**_{**preceding**}.

Block 160 is followed by a block 170, which calculates the line **R**_{**parall-norm**} parallel to and separated from line **R**_{**norm**} by a predetermined distance **Dp,** the value of which is determined experimentally. Line **R**_{**parall-norm**} falls within points **P**_{**preceding**} and **P**_{**next**}.

Block 170 is followed by a block 180, which calculates the point of intersection **P**_{**x**} between line **R**_{**preceding-next**} and line **R**_{**parall-norm**}.

Block 180 is followed by a block 190, which calculates, for point **P**_{**x**}, the value ϕ of the angle of rotation c about axis 10.

Block 190 is followed by a block 200, which assigns to coordinate **c** of the **i**-th point in the next scan of a different plane (different **Z** value) the value of angle calculated for the i-th point in the scan for which the above calculations were performed.

Block 200 is followed by a block 220 and by a block 210, which increases the current value **i** by **1** to select a respective further point, for which a further angle (blocks 120, 130, 140, 150, 160, 170, 180, 190) is calculated (for which purpose, block 210 goes back to block 110) to determine coordinate **c** of the further point.

In this way, the angular coordinate value c about the axis of rotation of a generic point in a plane is established on the basis of the coordinates of a pair of points (selected by blocks 120, 140, 130) relating to a previous scan of a different plane.

The above operations are repeated for all the points in each plane, so that each point in the plane has an angular value **c** calculated on the basis of pairs of points relating to a previous plane.

The angular spacing of points about axis of rotation 10 therefore varies according to the physical characteristics determined of the form. Tests conducted by the Applicant have shown the above operations provide for varying the angular spacing of points about the axis of rotation, and at the same time for maintaining the lengths of the curved segments **Sc** on the scanned meridian profile substantially constant.

Between blocks 210 and 200, a block 220 is provided to determine whether value **i** equals the maximum value **max,** i.e. whether all the points in a given scan have been examined. If they have not, block 220 is followed by block 210, which commands examination of a next point in the scan. If they have, block 220 is followed by a block 230, which reinitializes value **i** to **1** (i=1) to begin calculating angle again. Block 230 also increases the current **Z** value by **Z** to determine points **Pi** in another plane, and then goes back to block 110.

A device is thus provided for determining three-dimensional forms, in which adjacent points are spaced by an angle which is modified dynamically on the basis of the values of points determined in a previous plane.

Research and experiments conducted by the Applicant have shown that the angular plane arrangement described provides for determining points which, even in the presence of marked curvature with respect to the Z axis, ensure accurate description of the form.

Clearly, changes may be made to the device and method of determining three-dimensional forms, in particular shoemaker's models, as described herein without, however, departing from the scope of the present invention.

## Claims

1. A device for determining forms, in particular shoemaker's models, comprising:
- rotating means (6, 12, 13) for rotating a form (2) about an axis of rotation (10); and
- measuring means (15) for determining the three-dimensional coordinates **P(z,c,p)** of a number of points (**P**_{**1**}**, P**_{**2**}**, ... P**_{**i**} **... P**_{**n**}) located on a parallel profile **(Pp)** of the form (2) and lying in a plane **(Kp)** perpendicular to the axis of rotation (10);
said measuring means (15) scanning said form (2) to determine successive adjacent points **(P**_{**i**}**)** relating to a number of parallel profiles (**Pp**) in respective different planes (**Kp**) parallel to one another;
**characterized by** comprising processing means by which, for each point in a scan, the current angular coordinate of said point with respect to the axis of rotation (10) is calculated on the basis of the three-dimensional coordinates of a pair of points (120, 130, 140) relating to a previous scan of a different plane.

2. A device as claimed in Claim 1, wherein said processing means comprise:
- discerning means (110, 120, 130, 140) for examining the sequence of points determined to select an initial calculating point **P**_{**next**} and a final calculating point **P**_{**preceding**} defining said pair;
- first line calculating means (150) for calculating the line **R**_{**preceding-next**} through said final calculating point **P**_{**preceding**} and said initial calculating point **P**_{**next**}**;**
- second line calculating means (160) for calculating the line **R**_{**norm**} perpendicular to line **R**_{**preceding-next**} and through the final calculating point **P**_{**preceding**}**;**
- third line calculating means (170) for calculating the line **R**_{**parall-norm**} parallel to and separated from line **R**_{**norm**} by a predetermined distance **Dp;**
- intersection calculating means (180) for calculating the point of intersection **Px** between line **R**_{**preceding-next**} and line **R**_{**parall-norm**}**;**
- extracting means (190) for determining the angular value ϕ of the angular coordinate about the axis of rotation (10) of said point of intersection **Px**; and
- setting means for setting the value of the current said angular coordinate (c) equal to the previously determined said angular value ϕ.

3. A device as claimed in Claim 2, wherein said discerning means examine the points in the scan singly, and for each current point in the scan:
- if the point examined is the first point in the scan (i=1), the initial calculating point **P**_{**next**} is defined by the next point following the current point, and the final calculating point **P**_{**preceding**} is defined by the last point in the scan;
- if the point examined is the last point in the scan (i=max), the initial calculating point **P**_{**next**} is defined by the first point in the scan, and the final calculating point **P**_{**preceding**} is defined by the last-but-one point in the scan; and
- if the point examined is an intermediate point in the scan, the initial calculating point **P**_{**next**} is defined by the first adjacent point following the current point, and the final calculating point **P**_{**preceding**} is defined by the first adjacent point preceding the current point.

4. A method of determining three-dimensional forms, in particular shoemaker's models, comprising the steps of:
- rotating a form (2) about an axis of rotation (10);
determining, during said rotation, the three-dimensional coordinates **P(z,c,p)** of a number of successive adjacent points **(P**_{**1**}**, P**_{**2**}**, ... P**_{**i**} **... P**_{**n**}**)** located on a parallel profile **(Pp)** of the form (2) and lying in a plane (**Kp**)perpendicular to the axis of rotation (10);
said determining step being repeated to scan said form (2) to determine points (**Pi**) relating to a number of parallel profiles (**Pp**) lying in respective different planes (**Kp**) parallel to one another;
**characterized by** comprising a processing step, wherein, for each point in a scan, the current angular coordinates of said point with respect to the axis of rotation (10) are calculated on the basis of the three-dimensional coordinates of a pair of points relating to a previous scan of a different plane.

5. A method as claimed in Claim 4, wherein said processing step comprises the steps of:
- examining (110, 120, 130, 140) the sequence of points determined to select an initial calculating point **P**_{**next**} and a final calculating point **P**_{**preceding**} defining said pair of points;
- calculating (150) the line **R**_{**preceding-next**} through said final calculating point **P**_{**preceding**} and said initial calculating point **P**_{**next**}**;**
- calculating (160) the line **R**_{**norm**} perpendicular to line **R**_{**preceding-next**} and through the final calculating point **P**_{**preceding**}**;**
- calculating (170) the line **R**_{**parall-norm**} parallel to and separated from line **R**_{**norm**} by a predetermined distance **Dp;**
- calculating (180) the point of intersection **Px** between line **R**_{**preceding-next**} and line **R**_{**parall-norm**}**;**
- determining (190) the angular value ϕ of the angular coordinate (**C**) about the axis of rotation (10) of said point of intersection **Px**; and
- setting the current value of said angular coordinate (**C**) about the axis of rotation (10) equal to the previously determined said angular value ϕ.

6. A method as claimed in Claim 5, wherein the step of examining (110, 120, 130, 140) the sequence of points determined comprises the following operations:
- if the point examined is the first point in the scan (i=1), the initial calculating point **P**_{**next**} is defined by the next point following the current point, and the final calculating point **P**_{**receding**} is defined by the last point in the scan;
- if the point examined is the last point in the scan, the initial calculating point **P**_{**next**} is defined by the first point in the scan, and the final calculating point **P**_{**preceding**} is defined by the last-but-one point in the scan; and
- if the point examined is an intermediate point in the scan, the initial calculating point **P**_{**next**} is defined by the first adjacent point following the current point, and the final calculating point **P**_{**preceding**} is defined by the first adjacent point preceding the current point.
